# EUROPÄISCHE PATENTANMELDUNG

(11) **EP 0 673 822 A1**
(43) Veröffentlichungstag der Anmeldung: **27.09.1995**
(21) Anmeldenummer: 95103822.3
(22) Anmeldetag: 16.03.1995
(51) Int. Cl.: B61D 37/00, B60N 3/00

(54) **Eisenbahnwagen mit einem im Fahrgastraum des Eisenbahnwagens angeordneten Tisch**

(30) Priorität: 26.03.1994 DE 9405173 U
(71) Anmelder: Reiche & Co., 32791 Lage/Lippe (DE)
(72) Erfinder: Bruch, Uwe, Dipl.-Ing., D-32805 Horn-Bad Meinberg (DE)
(74) Vertreter: Stracke, Alexander, Dipl.-Ing.

(57) **Zusammenfassung**

Bei Eisenbahnwagen ist es üblich, im Fahrgastraum einen Tisch aufzustellen. Durch die Erfindung soll erreicht werden, daß die Einsatzmöglichkeiten und die Erreichbarkeit des Tisches für die Fahrgäste verbessert werden. Dazu ist die Tischplatte (16) in einer im wesentlichen horizontalen Ebene in dem Traggestell (14) verschiebbar gelagert. Die Verschiebebewegung wird durch Endanschläge (32, 34) begrenzt. Der erfindungsgemäße Eisenbahnwagen ist besonders für den Nahverkehr geeignet.

## Beschreibung

Die Erfindung betrifft einen Eisenbahnwagen gemäß der im Oberbegriff des Anspruches 1 angegebenen Art.

Derartige Eisenbahnwagen, die in ihrem Fahrgastraum einen Tisch aufweisen, sind in unterschiedlichen Ausführungen bekannt. Vielfach sind die Tische als Klapptische ausgebildet und an einer Seitenwand des Eisenbahnwagens angeordnet. Insbesondere bei Eisenbahnwagen, die im Fahrgastraum mehrere Fahrgastabteile aufweisen, die im wesentlichen durch einander gegenüberliegend angeordnete Sitzgruppen gebildet werden, ist der Tisch lediglich für die unmittelbar neben der Seitenwand des Eisenbahnwagens sitzenden Fahrgäste erreichbar.

Der Erfindung liegt die Aufgabe zugrunde einen Eisenbahnwagen der eingangs genannten Art derart weiterzubilden, daß die Einsatzmöglichkeiten und die Erreichbarkeit des Tisches für die Fahrgäste verbessert werden.

Diese Aufgabe wird durch die kennzeichnenden Merkmale des Anspruches 1 in Verbindung mit den Oberbegriffsmerkmalen gelöst. Beispielsweise bei zwei einander gegenüberliegenden Sitzgruppen neben einer Seitenwand, an der zwischen den beiden Sitzgruppen der Tisch mit der verschiebbar gelagerten Tischplatte vorgesehen ist, ist diese nunmehr für alle Fahrgäste der Sitzgruppe durch Verschieben der Tischplatte in die entsprechende Richtung besser erreichbar. Ein weiterer Vorteil ergibt sich dadurch, daß nunmehr auch Bereiche unmittelbar unterhalb des Tisches bei der Seitenwandung des Eisenbahnwagens bei entsprechend verschobener Tischplatte einfacher erreichbar sind, wodurch Wartungsarbeiten, Reinigungsarbeiten oder ähnliches bedeutend erleichtert werden.

Damit die Tischplatte lediglich über einen definierten Weg verschoben werden kann, ist der Tisch mit Endanschlägen versehen, zwischen denen die Tischplatte bei Normalgebrauch maximal verschiebbar ist. Dabei wird auch erreicht, daß eine gewünschte, durch den Tisch aufnehmbare Mindestbelastung in jeder Verschiebeposition der Tischplatte gegeben ist und nicht bei Überschreiten einer bestimmten Endposition der Tischplatte die Mindestbelastung verändert wird.

Gemäß einer Ausführungsform weist der Tisch eine parallel zu einer Horizontalachse gerichtete Führung für die Verschiebebewegung der Tischplatte auf. Insbesondere ist das Tragegestell mit der Führung für die Tischplatte an einer im wesentlichen vertikal verlaufenden Wandung des Fahrgastraumes des Eisenbahnwagens aufgehängt. Durch diese raumsparende Anordnung ist zudem der Unterboden des Eisenbahnwagens für Reinigungsarbeiten ungehindert zugänglich.

Um die Wartungsarbeiten des Tisches zu vereinfachen, ist die Tischplatte lösbar im Tragegestell gelagert.

Vorzugsweise weist die Führung eine mit dem Tragegestell verbundene Führungsschiene und eine in der Führungsschiene verschiebbar angeordnete, mit der Tischplatte verbundene Gleitschiene auf.

Um eine instabile Verschiebeposition der Tischplatte zu verhindern, ist diese in jeder stufenlos, kontinuierlich verschiebbaren Position in vorbestimmter Weise geklemmt. Beispielsweise ist dafür in der Führungsschiene oder der Gleitschiene ein federbelastetes Gleitelement angeordnet, das gegen die Gleitschiene bzw. Führungsschiene drückt. Zweckmäßig ist es hierbei, daß die Federbelastung einstellbar ausgebildet ist, damit auf der einen Seite bei nachlassender Federspannung die vorbestimmte Klemmung nachgestellt werden kann und auf der anderen Seite eine individuelle Einstellung der Federbelastung von vornherein ermöglicht wird.

Aus Gründen der Sicherheit und aus ästhetischen Gründen ist es günstig, den Randbereich der Tischplatte zu verrunden.

Gemäß einer weiteren Ausführungsform der Erfindung ist unter dem Tisch ein Behälter, insbesondere ein Aschenbecher, angeordnet, wobei die Tischplatte eine in Bezug auf die Draufsicht des Behälters angepaßte Ausnehmung aufweist. Dadurch wird erreicht, daß der unter dem Tisch angeordnete Behälter leicht erreichbar ist, auch wenn die Tischplatte über dem Behälter angeordnet ist. Ist der Behälter und der Tisch untereinander an der Seitenwand des Eisenbahnwagens angebracht und die Tischplatte von der Seitenwand in eine Endstellung verschoben, so kann beispielsweise der Aschenbecher leicht entleert werden. Ist der Tisch an die Seitenwand zurückverschoben, so ist der Aschenbecher aufgrund der zugeordneten Ausnehmung auch weiterhin gut für die Fahrgäste erreichbar.

Die individuelle Anordnung des Tisches wird auch dadurch verbessert, daß das Tragegestell des Tisches in beliebiger Höhe angebracht werden kann.

Weitere Vorteile und Merkmale der Erfindung ergeben sich auch aus der folgenden Beschreibung einer Ausführungsform der Erfindung im Zusammenhang mit der Zeichnung. Es zeigen:
- Figur 1: einen Eisenbahnwagen in schematischer Darstellung im Horizontalschnitt;
- Figur 2: eine Ansicht in Richtung des Pfeiles II in Figur 1 unter Weglassung der Seitenwand des Eisenbahnwagens;
- Figur 3: eine perspektivische Vorderansicht eines Tisches;
- Figur 4: eine Draufsicht auf den Tisch von Figur 3 mit Schnittdarstellung;
- Figur 5: eine Querschnittsansicht entlang der Linie V-V von Figur 4;
- Figur 6: eine Draufsicht auf den Tisch wie in Figur 4, wobei beide Endpositionen dargestellt sind;
- Figur 7: eine Seitenansicht von Figur 6; und
- Figur 8: eine Vorderansicht von Figur 6.

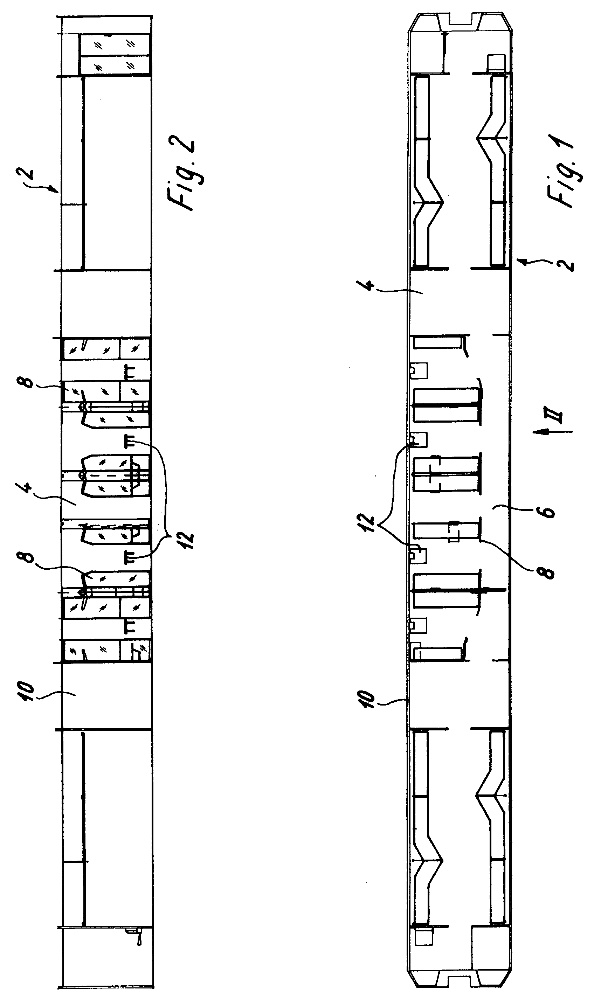

Der in Figur 1 und 2 aufgezeigte Eisenbahnwagen 2 weist einen Fahrgastraum 4 auf, in dem die Sitze einer Sitzgruppe über einen Seitengang 6 zugänglich sind. Einander gegenüberliegend sind im mittleren Bereich des Fahrgastraumes 4 jeweils zwei Sitzgruppen angeordnet, die ein Fahrgastabteil bilden. Insbesondere weist der Eisenbahnwagen 2 fünf Fahrgastabteile auf. Die einander gegenüberliegenden Sitzgruppen der Fahrgastabteile werden durch schmale Raumteiler 8 unterschiedlicher Ausführung von dem Seitengang 6 abgegrenzt. In einem Fahrgastabteil, zwischen den beiden Sitzgruppen, ist an der im wesentlichen vertikal angeordneten Seitenwand 10 des Eisenbahnwagens 2 ein Tisch 12 aufgehängt.

Der Tisch 12 besteht aus einer in einem Tragegestell 14 verschiebbar gelagerten Tischplatte 16, deren obere Kanten verrundet sind. Unter dem Tisch 12 ist ein in den Figuren 1 bis 8 nicht dargestellter Behälter angeordnet, der in der Draufsicht einen Umfang hat, der einer Ausnehmung 18 der Tischplatte 16 auf der der Seitenwand 10 liegenden Seite entspricht. Der Tisch 12 ist im wesentlichen zu seiner Längsebene symetrisch aufgebaut.

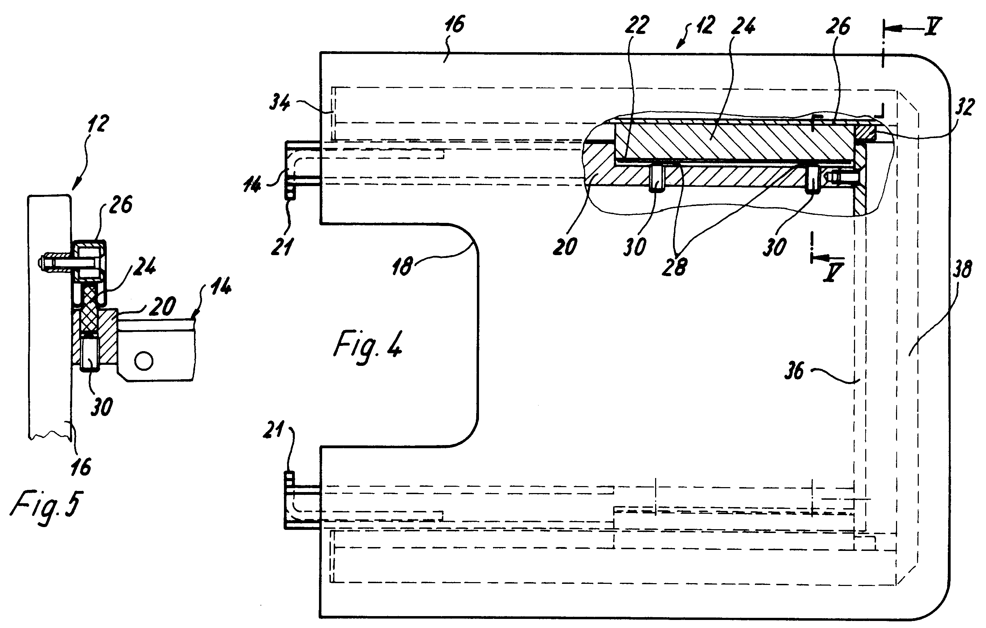

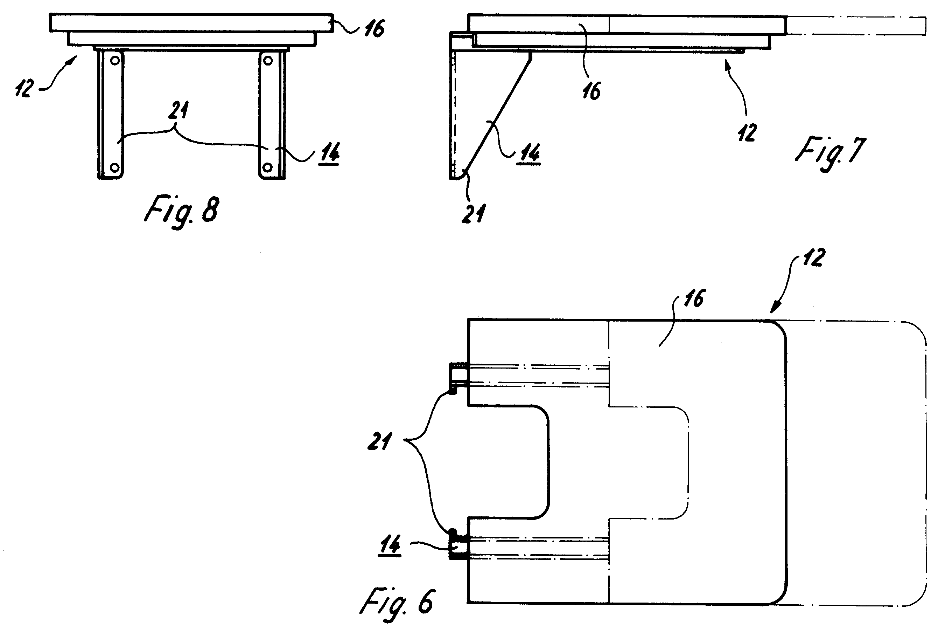

Wie den Figuren 4 und 5 aber auch 6 bis 8 zu entnehmen ist, ist die Tischplatte 16 verschiebbar im Tragegestell 14 gelagert. Das Tragegestell 14 weist dafür jeweils zwei Führungsschienen 20 mit jeweils einer Ausnehmung 22 für ein Gleitelement 24 auf. Das Gleitelement 24 ist in einer zur Längsachse 26 des Tisches 12 senkrechten Achse verschiebbar gelagert.

Die Tischplatte 16 weist an ihrer Unterseite jeweils zwei den Gleitelementen 24 zugeordnete Gleitschienen 26 auf. Die Gleitelemente 24 sind in Richtung auf die Gleitschienen 26 federbelastet. Die auf das Gleitelement 24 jeweils wirkenden Federn sind mit dem Bezugszeichen 28 versehen. Die Federn 28 sind durch Schrauben 30 spannbar, d. h. mit Eindrehen der Schrauben 30 erhöht sich die auf das Gleitelement 24 wirkende Federkraft und somit die auf die Gleitschiene 26 wirkende Klemmkraft. Senkrecht nach unten zu den Führungsschienen 20 sind Anschlagwinkel 21 zur Aufhängung des Tisches 12 an der Seitenwand 10 des Eisenbahnwagens 2 vorgesehen. Der Tisch 12 ist über seine Anschlagwinkel 21 dabei mit der Seitenwand 10 verschraubt.

Die aus Führungsschienen 20, Gleitelement 24 und Gleitschienen 26 bestehende Führung des Tisches 12 ist somit senkrecht zur Seitenwand 10 gerichtet, so daß die Tischplatte 16 in einer horizontalen Ebene, senkrecht zur Seitenwand 10 von dieser weg und wieder zu dieser hin verschiebbar ist.

Im Bereich der beiden äußeren Enden der Gleitschiene 26 sind Endanschläge 32, 34 angebracht, die die Verschiebebewegung der Tischplatte 16 gegenüber dem Tragegestell 14 begrenzen.

In Figur 4 liegt der vordere Endanschlag 32 an dem Gleitelement 24 an und der hintere Endanschlag 34 ist in einer vom Gleitelement 24 entfernt gelegenen Position.

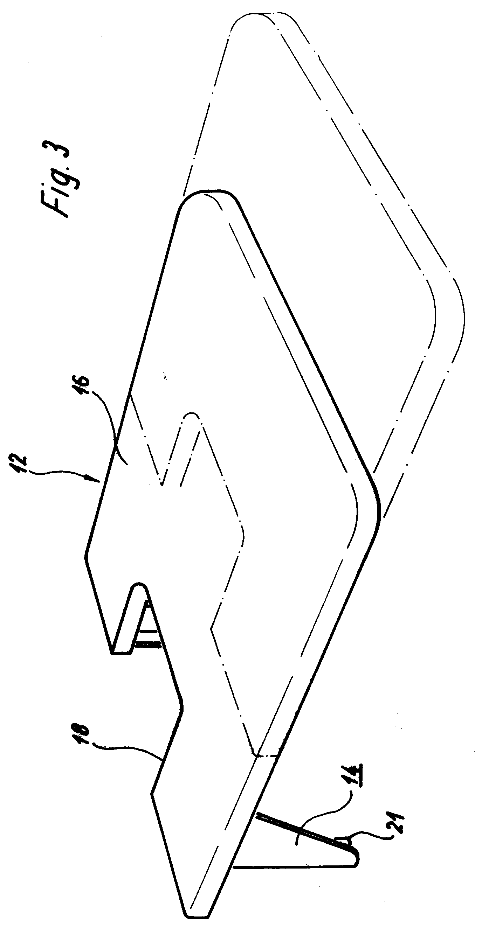

Ist die Tischplatte 16 in ihrer ausgefahren Position, siehe Figur 3, Figur 6 und Figur 7, die strichpunktiert angedeutet ist, liegt der hintere Endanschlag 34 an dem Gleitelement 24 an. Dadurch wird erreicht, daß sich zum einen die Tischplatte 16 nicht unbeabsichtigt von dem Tragegestell 14 durch Herausziehen dieser lösen kann. Auf der anderen Seite wird die Tischplatte 16 immer in einer stabilen Position gehalten, die eine Mindestbelastung aufnehmen kann und somit ein Zerstören des Tisches 12 verhindert.

Der hintere und vordere Endanschlag 34, 32 ist in der Gleitschiene 26 eingesetzt. Mit Lösen des Querträgers 36 ist somit die Tischplatte 16 zusammen mit den Gleitelementen 24 aus dem Tragegestell herausziehbar.

Wie deutlich der Figur 5 zu entnehmen ist, ist die Gleitschiene 26 an die Tischplatte 16 angeschraubt. Zur Erhöhung der Stabilität des Tragegestells 14 als auch der Tischplatte 16 sind die Führungsschienen 20 bzw. die Gleitschienen 26 an ihrer Stirnseite miteinander über die Querträger 36 bzw. 38 miteinander verbunden. Der Querträger 38 dient zusätzlich als Griff zum Verschieben der Tischplatte.

Über einen seitlichen Anschlagwinkel 21 ist der Tisch in beliebiger Höhe anzubringen, wodurch sich die individuelle Anordnung im Fahrgastraum erhöht.

Die Erfindung zeichnet sich somit durch ihre einfache Bauweise sowie durch die Möglichkeit aus, daß die Erreichbarkeit des Tisches 12 beispielsweise in einem Fahrgastabteil der oben beschriebenen Art vergrößert wird. Desweiteren sind beispielsweise darunter angeordnete Behälter leichter zugänglich. Durch die Aufhängung des Tisches 12 an der Seitenwand 10 des Eisenbahnwagens 2 und, da die Tischplatte in der eingeschobenen Position nur wenig in den Raum ragt, wird die Reinigung des Fahrgastraumes 4 nicht beeinträchtigt, sondern vielmehr erleichtert.

### Bezugszeichen

- 2: Eisenbahnwagen
- 4: Fahrgastraum
- 6: Seitengang
- 8: Raumteiler
- 10: Seitenwand
- 12: Tisch
- 14: Tragegestell
- 16: Tischplatte
- 18: Ausnehmung
- 20: Führungsschiene
- 21: Anschlagwinkel
- 22: Ausnehmung
- 24: Gleitelement
- 26: Gleitschiene
- 28: Federn
- 30: Schrauben
- 32: Endanschlag - vorne
- 34: Endanschlag - hinten
- 36: Querträger - Führungsschiene
- 38: Querträger - Gleitschiene

## Patentansprüche

1. Eisenbahnwagen (2) mit einem im Fahrgastraum (4) des Eisenbahnwagens (2) angeordneten Tisch (12) mit einer Tischplatte (16) und einem die Tischplatte (16) tragenden Tragegestell (14), **dadurch gekennzeichnet**, daß die Tischplatte (16) in einer im wesentlichen horizontalen Ebene, insbesondere kontinuierlich, in dem Tragegestell (14) verschiebbar gelagert ist.

2. Eisenbahnwagen nach Anspruch 1, dadurch gekennzeichnet, daß der Tisch (12) mit Endanschlägen (32, 34) versehen ist, zwischen denen die Tischplatte (16) bei Normalgebrauch maximal bewegbar ist.

3. Eisenbahnwagen nach Anspruch 1 oder 2, dadurch gekennzeichnet, daß der Tisch (12) eine parallel zu einer horizontalen Achse gerichtete Führung (20, 24, 26) für die Tischplatte (16) aufweist.

4. Eisenbahnwagen nach Anspruch 3, dadurch gekennzeichnet, daß das Tragegestell (14) der Führung (20, 24, 26) an einer im wesentlichen vertikal verlaufenden Wandung (10) des Fahrgastraumes (4) aufgehängt ist.

5. Eisenbahnwagen nach Anspruch 3 und 4, dadurch gekennzeichnet, daß die Führung (20, 24, 26) des Tisches (12) senkrecht zur Wandung (10) des Fahrgastraumes (4) verläuft.

6. Eisenbahnwagen nach einem der vorangehenden Ansprüche, dadurch gekennzeichnet, daß die Tischplatte (16) lösbar im Tragegestell (14) gelagert ist.

7. Eisenbahnwagen nach Anspruch 3 und insbesondere einem der Ansprüche 4 bis 6, dadurch gekennzeichnet, daß die Führung (20, 24, 26) eine mit dem Tragegestell (14) verbundene Führungsschiene und eine in der Führungsschiene (20) verschiebbar angeordnete, mit der Tischplatte (16) verbundene Gegenschiene, vorzugsweise Gleitschiene (26), aufweist.

8. Eisenbahnwagen nach einem der vorangehenden Ansprüche, dadurch gekennzeichnet, daß die Tischplatte (16) in jeder stufenlos verschiebbaren Position in vorbestimmter Weise festgehalten ist.

9. Eisenbahnwagen nach Anspruch 7 und 8, dadurch gekennzeichnet, daß in der Führungsschiene (20) oder der Gleitschiene (26) ein vorzugsweise federbelastetes Gleitelement (24) angeordnet ist, das gegen die Gleitschiene (26) bzw. die Führungsschiene (20) drückt.

10. Eisenbahnwagen nach Anspruch 9, dadurch gekennzeichnet, daß die Federbelastung des Gleitelementes (24) einstellbar ausgebildet ist.

11. Eisenbahnwagen nach einem der vorangehenden Ansprüche, dadurch gekennzeichnet, daß zumindest Teile der Kanten der Tischplatte (16) verrundet sind.

12. Eisenbahnwagen nach einem der vorangehenden Ansprüche, gekennzeichnet durch eine symetrische Ausbildung des Tisches (12).

13. Eisenbahnwagen nach einem der vorangehenden Ansprüche, dadurch gekennzeichnet, daß unter dem Tisch (12) ein Behälter, insbesondere ein Aschenbecher, angeordnet ist, wobei die Tischplatte (16) eine in Bezug auf die Draufsicht des Behälters angepaßte Ausnehmung (18) aufweist.

14. Eisenbahnwagen nach einem der vorangehenden Ansprüche, dadurch gekennzeichnet, daß das Tragegestell (14) des Tisches (12) in verschiedene Gebrauchshöhen festlegbar ist.
